# EUROPÄISCHE PATENTSCHRIFT

(11) **EP 2 843 980 B1**
(45) Veröffentlichungstag und Bekanntmachung des Hinweises auf die Patenterteilung: **11.01.2017**
(21) Anmeldenummer: 13182564.8
(22) Anmeldetag: 02.09.2013
(51) Int. Cl.: H04W 12/02, H04L 29/06, H04L 12/46

(54) **Mobiles Kommunikationsgerät und Verfahren zum Empfangen von Datenpaketen**
Mobile communication device and method for receiving data packets
Appareil de communication mobile et procédé de réception de paquets de données

(43) Veröffentlichungstag der Anmeldung: 04.03.2015
(73) Patentinhaber: Schmoldt, Ulrich, 81927 München (DE)
(72) Erfinder: Schmoldt, Ulrich, 81927 München (DE)
(74) Vertreter: Horn Kleimann Waitzhofer Patentanwälte PartG mbB

(56) Entgegenhaltungen:
- EP-A1- 2 403 211
- US-A1- 2006 005 240

## Beschreibung

Die vorliegende Erfindung betrifft ein mobiles Kommunikationsgerät zum Empfangen von Datenpaketen, die vertrauliche Informationen enthalten, wie beispielsweise Bankdaten. Des Weiteren betrifft die Erfindung ein Verfahren zum Empfangen von Datenpaketen, welche vertrauliche Informationen enthalten, und ein Kommunikationssystem mit einem solchen mobilen Kommunikationsgerät.

Auf verschiedenen Gebieten kann es erforderlich sein, dass der Empfang von vertraulichen Informationen nach Erhalt durch den Empfänger bestätigt wird. Es besteht grundsätzlich die Möglichkeit, vertrauliche Informationen, wie beispielsweise Bank- oder Versicherungsdaten oder ähnliches, per Email an den Empfänger zu senden. Allerdings sollte, um die Vertraulichkeit zu gewährleisten, die Übersendung in verschlüsselter Form erfolgen. Je nach Art der vertraulichen Informationen wird jedoch ein Versand per Email als nicht geeignet angesehen, da keine direkte Bestätigung des Empfangs vorgesehen ist.

Eine andere Möglichkeit der Zustellung von vertraulichen Informationen besteht darin, diese vertraulichen Informationen im Rahmen eines Online-Zugangs auf einer Internetseite bereitzustellen. Hierbei muss jedoch der Empfänger aktiv die bereitgestellten vertraulichen Informationen von der Internetseite herunterladen, um den Empfang der Informationen durch diese Aktion zu bestätigen.

Weiterer Stand der Technik ist in den Patentanmeldungen US2006/005240 und EP2403211 offenbart.

Vor diesem Hintergrund besteht eine Aufgabe der vorliegenden Erfindung darin, ein mobiles Kommunikationsgerät zum Empfangen von Datenpaketen, die vertrauliche Informationen enthalten, bereitzustellen, das einen zuverlässigen und sicheren Empfang von Datenpakten und dessen Bestätigung ermöglicht. Weitere Aufgaben sind die Bereitstellung eines Kommunikationssystems mit einem solchen mobilen Kommunikationsgerät und die Bereitstellung eines entsprechenden Verfahrens.

Die gestellten Aufgaben werden durch ein mobiles Kommunikationsgerät mit den Merkmalen des Anspruchs 1, ein Kommunikationssystem mit den Merkmalen des Anspruchs 11 sowie ein Verfahren mit den Merkmalen des Anspruchs 13 gelöst.

Demgemäß wird ein mobiles Kommunikationsgerät zum Empfangen von Datenpaketen, die vertrauliche Informationen enthalten, vorgeschlagen, wobei das mobile Kommunikationsgerät eine Sende- und Empfangseinrichtung zum Empfangen eines Startsignals von einer Servereinrichtung aufweist, wobei das Startsignal Informationen aufweist, um einen VPN-Tunnel zwischen der Servereinrichtung und dem mobilen Kommunikationsgerät aufzubauen. Die Sende- und Empfangseinrichtung ist eingerichtet, den VPN-Tunnel zwischen der Servereinrichtung und dem mobilen Kommunikationsgerät basierend auf den empfangenen Informationen aufzubauen, über den aufgebauten VPN-Tunnel Datenpakete zu empfangen, und vertrauliche Informationen, die in den empfangenen Datenpaketen enthalten sind, zu extrahieren. Die Sende- und Empfangseinrichtung ist des Weiteren eingerichtet, eine Antwortnachricht an die Servereinrichtung zu senden, um den Empfang der vertraulichen Informationen zu bestätigen.

Durch dieses mobile Kommunikationsgerät ist es möglich, vertrauliche Informationen sicher zu empfangen, und den Empfang dieser vertraulichen Informationen zuverlässig zu bestätigen. Unter vertraulichen Informationen werden in diesem Zusammenhang Informationen in der Form von Dokumenten oder anderen Datenformaten verstanden, die nur einer bestimmten Anzahl von Personen zugänglich gemacht werden dürfen oder sollen. Beispielsweise kann es sich um Bankdaten handeln, die üblicherweise nur dem Kontoinhaber und der Bank bekannt sein dürfen. Die vertraulichen Informationen können sich auch auf Versicherungsdaten beziehen, die üblicherweise nur dem Versicherungsnehmer und der Versicherung bekannt sein dürfen.

Um eine sichere Übertragung der Daten, welche die vertraulichen Informationen enthalten, zu gewährleisten, wird ein VPN (Virtual Private Network)-Tunnel zwischen der Servereinrichtung, die die vertraulichen Informationen versendet, sowie dem mobilen Kommunikationsgerät aufgebaut. Zum Aufbau des VPN-Tunnels weist das mobile Kommunikationsgerät eine Sende- und Empfangseinrichtung auf, die in der Lage ist, Signale von der Servereinrichtung zu empfangen und Signale an diese Servereinrichtung zu versenden. Die Datenpakete, die die vertraulichen Informationen beinhalten, werden auf elektronischem Weg ausschließlich über den bestehenden VPN-Tunnel versendet. Nach dem Empfang der Datenpakete bestätigt das mobile Kommunikationsgerät über die Sende- und Empfangseinrichtung an die Servereinrichtung mittels einer Antwortnachricht, dass die vertraulichen Informationen empfangen wurden.

Ein Benutzer des mobilen Kommunikationsgeräts kann beispielsweise, nachdem die Datenpakte mit den vertraulichen Informationen empfangen und die vertraulichen Informationen, nach deren Extrahierung aus den Datenpaketen, angezeigt wurden, deren Empfang über Eingabe einer Bestätigung bestätigen. So kann beispielsweise dem Benutzer auf dem mobilen Kommunikationsgerät eine Anzeige "Bestätigen" angeboten werden, um den Empfang der vertraulichen Informationen automatisch bestätigen zu können. Zu diesem Zweck kann das mobile Kommunikationsgerät eine Anzeigevorrichtung aufweisen, auf der die Informationen und die Anzeige "Bestätigen" angezeigt werden. Eine solche Anzeigevorrichtung kann eine beliebige Art von Anzeigevorrichtung sein, wie beispielsweise ein LCD-Display. Alternativ kann die Anzeigevorrichtung ein Touch-Screen sein, über den auch die Bestätigungs-Eingabe des Benutzers erfolgen kann. In einer weiteren Ausführungsform kann das mobile Kommunikationsgerät zusätzlich oder alternativ ein Eingabemittel, wie eine Tastatur, aufweisen.

Durch den verwendeten VPN-Tunnel wird eine sichere Verbindung zwischen der Servereinrichtung und dem mobilen Kommunikationsgerät bereitgestellt. Durch den VPN-Tunnel, oder VPN-Verbindung, wird die Servereinrichtung, als Teilnehmer eines privaten Netzwerks, mit dem mobilen Kommunikationsgerät, als Teilnehmer eines weiterten privaten Netzwerks, verbunden. Durch diese direkte Verbindung wird das öffentliche Netz getunnelt. Auf diese Weise sind Angriffe von Dritten erschwert, da kein öffentlicher Zugriff auf den VPN-Tunnel besteht. Der VPN-Tunnel bzw. die darüber laufende Kommunikation kann auch um eine zusätzliche Verschlüsselung ergänzt werden, die eine abhör- und manipulationssicher Kommunikation zwischen der Servereinrichtung und dem mobilen Kommunikationsgerät ermöglicht.

Durch das vorgeschlagene mobile Kommunikationsgerät kann also eine sichere Übertragung von vertraulichen Informationen über einen VPN-Tunnel gewährleistet werden, durch den ein Angriff durch Dritte auf die vertraulichen Daten ausgeschlossen wird. Durch die Bestätigung des Empfangs der vertraulichen Informationen wird zusätzlich gewährleistet, dass der Empfänger diese vertraulichen Informationen empfangen hat. Da der Empfang durch eine Aktion des Benutzers bestätigt wird, kann auch von einer Kenntnisnahme der vertraulichen Informationen ausgegangen werden. Die Antwortnachricht ist demnach von einer Aktion oder Eingabe des Benutzers des mobilen Kommunikationsgeräts abhängig.

Gemäß einer Ausführungsform weist der VPN-Tunnel einen direkten Gateway zwischen dem mobilen Kommunikationsgerät und der Servereinrichtung auf.

Gemäß dieser Ausführungsform besteht der VPN-Tunnel bzw. die VPN-Verbindung aus einer direkten Punkt-zu-Punkt-Verbindung. Der VPN-Tunnel wird hierbei außerhalb des öffentlichen Netzes aufgebaut. Auf diese Weise wird ein besonders sicherer VPN-Tunnel gewährleistet. Der VPN-Tunnel befindet sich daher außerhalb des Internets, so dass kein Zugriff durch Dritte, die eine Verbindung in das öffentliche Netz, d.h. das Internat haben, auf den VPN-Tunnel erfolgen kann.

Es sind auch andere Arten von VPN-Tunneln möglich, beispielsweise als gekapselte Netze innerhalb eines öffentlichen Netzwerks wie dem Internet.

Gemäß einer weiteren Ausführungsform weist das mobile Kommunikationsgerät zumindest eine erste Antenne und eine Chipkarte zum Aufbau der VPN-Tunnel auf.

Die Chipkarte kann beispielsweise eine SIM-Karte sein, wie sie beispielsweise im Rahmen des Aufbaus einer Telefonverbindung zur Identifikation eines Geräts verwendet wird. Die zumindest eine erste Antenne kann irgendeine Antenne sein, die geeignet ist, eine Verbindung im Rahmen eines VPN-Tunnels zu der Servereinrichtung aufzubauen. Durch die Chipkarte, die bei der Servereinrichtung registriert sein kann, kann eine Identifikation des mobilen Kommunikationsgeräts und damit des Benutzers erfolgen. Auf diese Weise kann eine zusätzliche Absicherung der Kommunikation sowie beim Übersenden der vertraulichen Informationen erreicht werden.

Eine solche Chipkarte kann mehrere VPN-Tunnel unterstützen. Das bedeutet, dass mehrere VPN-Tunnel auf dieser Chipkarte eingerichtet sein können. So kann beispielsweise das mobile Kommunikationsgerät mit mehreren Servereinrichtungen über jeweils einen eigenen eingerichteten oder eingestellten VPN-Tunnel (dedizierter VPN-Tunnel) kommunizieren. Die VPN-Tunnel können auch gleichzeitig betrieben werden. Beispielsweise können zehn oder mehr VPN-Tunnel mit einer Chipkarte unterstützt werden.

Gemäß einer weiteren Ausführungsform ist das mobile Kommunikationsgerät ein nicht-internetfähiges Kommunikationsgerät.

Nicht-internet-fähig in diesem Zusammenhang bedeutet, dass, abgesehen von dem VPN-Tunnel, keine Verbindung in ein öffentliches Netzwerk wie das Internet aufgebaut werden kann. Auf diese Weise kann kein Angriff aus dem öffentlichen Netz auf den VPN-Tunnel ausgeführt werden.

Gemäß einer weiteren Ausführungsform weist das mobile Kommunikationsgerät zumindest eine zweite Antenne zum Aufbau einer WLAN-Verbindung auf, wobei die WLAN-Verbindung getrennt von dem VPN-Tunnel ist.

Gemäß dieser Ausführungsform ist das Kommunikationsgerät geeignet, eine WLAN-Verbindung aufzubauen, um über diese mit anderen Vorrichtungen zu kommunizieren. Um die Sicherheit des VPN-Tunnels nicht zu beeinträchtigen, wird die WLAN-Verbindung getrennt von dem VPN-Tunnel aufgebaut. So kann beispielsweise die erste Antenne ausschließlich für den VPN-Tunnel und die zweite Antenne ausschließlich für die WLAN-Verbindung verwendet werden. Des Weiteren ist es möglich, dass die beiden Verbindungen zueinander abgesichert sind, beispielsweise durch eine unterschiedliche Verschlüsselung.

Gemäß einer weiteren Ausführungsform ist die Sende- und Empfangseinrichtung eingerichtet, ein Initiierungssignal an die Servereinrichtung zur Initiierung des VPN-Tunnels zu senden.

Gemäß dieser Ausführungsform kann das mobile Kommunikationsgerät den Aufbau des VPN-Tunnels anstoßen. Beispielsweise, wenn Daten von dem Benutzer über den sicheren VPN-Tunnel gesendet werden sollen, kann es erforderlich sein, dass der Aufbau des VPN-Tunnels von dem mobilen Kommunikationsgerät ausgeht. Hierzu wird ein Initiierungssignal an die Servereinrichtung gesendet, wobei das Initiierungssignal der Servereinrichtung mittels in dem Initiierungssignal enthaltener Daten mitteilt, dass der Aufbau des VPN-Tunnels von dem mobilen Kommunikationsgerät gewünscht wird. Um den VPN-Tunnel aufzubauen, kann die Servereinrichtung spezifische Daten von dem mobilen Kommunikationsgerät benötigen, die entweder mit dem Initiierungssignal übersendet werden, oder in der Servereinrichtung gespeichert sein können. Beispielsweise kann durch das Initiierungssignal, vorzugsweise durch die vorhandene SIM-Karte, der Servereinrichtung mitgeteilt werden, um welches mobile Kommunikationsgerät es sich handelt.

Gemäß einer weiteren Ausführungsform ist die Sende- und Empfangseinrichtung eingerichtet, Datenpakete an die Servereinrichtung zu senden, wobei die Datenpakete vertrauliche Informationen enthalten.

Gemäß dieser Ausführungsform kann eine bidirektionale Kommunikation zwischen dem mobilen Kommunikationsgerät und der Servereinrichtung vorgesehen sein, wobei beide Kommunikationspartner vertrauliche Informationen senden können. Die vertraulichen Informationen werden von der Sende- und Empfangseinrichtung ebenfalls über den VPN-Tunnel gesendet.

Gemäß einer weiteren Ausführungsform sind die Datenpakete verschlüsselt.

Zusätzlich zu dem bereits abgesicherten VPN-Tunnel, der in einer Ausführungsform eine verschlüsselte Kommunikation durchführt, kann eine weitere Verschlüsselung der Datenpakete vorgesehen sein. Hierzu können beliebige Verschlüsselungsalgorithmen verwendet werden, wie beispielsweise synchrone oder asynchrone Verschlüsselungsalgorithmen. Dies führt zu einer weiteren Absicherung der vertraulichen Informationen, die in den Datenpaketen enthalten sind.

Gemäß einer weiteren Ausführungsform weist das mobile Kommunikationsgerät eine Verschlüsselungs- und/oder Entschlüsselungseinheit auf, die dazu eingerichtet ist, die Datenpakete zu verschlüsseln und/oder zu entschlüsseln.

Die Verschlüsselungs- und/oder Entschlüsselungseinheit kann dazu eingerichtet sein, synchrone oder asynchrone Verschlüsselungsalgorithmen zu verwenden, und basierend darauf Datenpakete zu codieren oder zu decodieren. Auf diese Weise wird der Empfang von verschlüsselten Datenpaketen sowie das Versenden von verschlüsselten Datenpaketen ermöglicht.

Gemäß einer weiteren Ausführungsform weisen die Datenpakete verschlüsselte und unverschlüsselte Informationen auf.

Gemäß dieser Ausführungsform sind gemischte Datenpakete, die sowohl verschlüsselte als auch unverschlüsselte Informationen aufweisen, möglich. Beispielsweise können vertrauliche Informationen, die in den Datenpaketen enthalten sind, in verschlüsselter Form übersendet werden, wohingegen Informationen, die nicht vertraulich sind, in unverschlüsselter Form in den Datenpaketen enthalten sein können. Wenn nicht alle zu übertragenden Informationen vertrauliche Informationen sind, kann auf diese Weise der Aufwand des Verschlüsselns und Entschlüsselns reduziert werden.

Gemäß einer weiteren Ausführungsform weist das mobile Kommunikationsgerät eine Speichervorrichtung auf, die dazu eingerichtet ist, die empfangenen Informationen zumindest teilweise verschlüsselt zu speichern.

Auf diese Weise kann sichergestellt werden, dass auf vertrauliche Informationen, die auf dem mobilen Kommunikationsgerät gespeichert sind, nicht ohne weiteres durch Dritte zugegriffen werden kann. Nicht vertrauliche Informationen können auch in unverschlüsselter Form auf dem mobilen Kommunikationsgerät gespeichert sein. Die Speichervorrichtung kann irgendeine Art von Speicher sein, wie beispielsweise ein nicht flüchtiger Datenspeicher.

Gemäß einer weiteren Ausführungsform ist das mobile Kommunikationsgerät ein E-Book-Reader.

Das mobile Kommunikationsgerät kann somit zusätzlich zu der Funktionalität des Empfangens und Anzeigens von vertraulichen Informationen oder nicht vertraulichen Informationen Bücher anzeigen. Zusätzlich zu elektronischen Büchern (E-Books) können auch andere Dokumente angezeigt werden. Hierzu kann das mobile Kommunikationsgerät eine Anzeigevorrichtung, wie einen Bildschirm, aufweisen, wie bereits oben erläutert ist.

Gemäß einem weiteren Aspekt wird ein Kommunikationssystem mit einer Servereinrichtung und einem mobilen Kommunikationsgerät, das die oben beschriebenen Merkmale aufweist, vorgeschlagen, wobei ein VPN-Tunnel zwischen der Servereinrichtung und dem mobilen Kommunikationsgerät aufbaubar ist.

Gemäß einer weiteren Ausführungsform weist die Servereinrichtung beispielsweise einen Bankserver auf. Hierbei kann der Bankserver über einen weiteren Server, der ein Telekommunikationsserver sein kann, mit dem mobilen Kommunikationsgerät kommunizieren. Die Servereinrichtung wird in dieser Ausführungsform durch den Bankserver und den Telekommunikationsserver gebildet.

Gemäß einem weiteren Aspekt wird ein Verfahren zum Empfangen von Datenpaketen, die vertrauliche Informationen enthalten, vorgeschlagen. Das Verfahren weist die folgenden Schritte auf: Empfangen eines Startsignals von einer Servereinrichtung, wobei das Startsignal Informationen aufweist, um einen VPN-Tunnel zwischen der Servereinrichtung und dem mobilen Kommunikationsgerät aufzubauen, Aufbauen des VPN-Tunnels zwischen der Servereinrichtung und einem mobilen Kommunikationsgerät basierend auf den empfangenen Informationen, Empfangen von Datenpaketen über den aufgebauten VPN-Tunnel, Extrahieren von vertraulichen Informationen, die in den Datenpaketen enthalten sind, und Senden einer Antwortnachricht an die Servereinrichtung, um den Empfang der vertraulichen Informationen zu bestätigen.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für das vorgeschlagene Kommunikationsgerät beschriebenen Ausführungsformen und Merkmale gelten für das vorgeschlagene Kommunikationsgerät sowie das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockdiagramm eines Kommunikationssystems;
- Fig. 2: zeigt ein schematisches Blockdiagramm eines Verfahrens zum Empfangen von Datenpaketen, die vertrauliche Informationen enthalten; und
- Fig. 3: zeigt Funktionsabläufe im Kommunikationssystem.

In den Figuren sind gleiche oder funktionsgleiche Elemente mit denselben Bezugszeichen versehen worden, sofern nichts anderes angegeben ist.

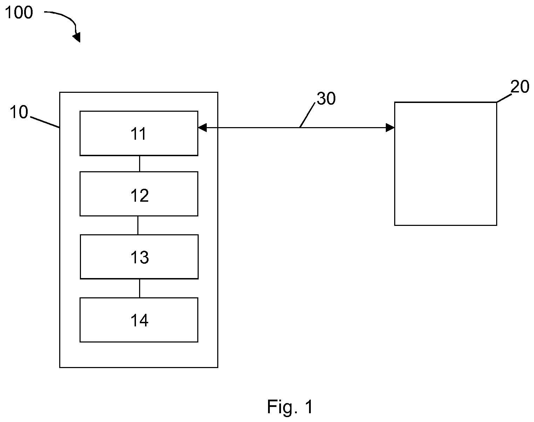

Fig. 1 zeigt ein Kommunikationssystem 100, welches ein mobiles Kommunikationsgerät 10 und eine Servereinrichtung 20 aufweist. Das mobile Kommunikationsgerät 10 kann über einen VPN-Tunnel 30 mit der Servereinrichtung 20 verbunden werden. Vor Bestehen des VPN-Tunnels 30 können das mobile Kommunikationsgerät 10 und die Servereinrichtung 20 über andere bestehende Kommunikationswege, wie Telefon- oder Internetverbindungen, kommunizieren, um den VPN-Tunnel 30 aufzubauen.

Hierzu sendet die Servereinrichtung 20 ein Startsignal an das mobile Kommunikationsgerät 10. In dem mobilen Kommunikationsgerät 10 wird das Startsignal mit einer Sende- und Empfangseinrichtung 11 empfangen. Das Startsignal weist Informationen auf, um den VPN-Tunnel 30 zwischen der Servereinrichtung 20 und dem mobilen Kommunikationsgerät 10 aufzubauen. Die Sende- und Empfangseinrichtung 11 ist dazu eingerichtet, den VPN-Tunnel 30 zwischen der Servereinrichtung 20 und dem mobilen Kommunikationsgerät 10 basierend auf den empfangenen Informationen aufzubauen, über den aufgebauten VPN-Tunnel 30 Datenpakete zu empfangen, und vertrauliche Informationen aus den empfangenen Datenpaketen zu extrahieren.

Durch die Verwendung eines VPN-Tunnels 30, der nur vom Absender und Empfänger, das heißt dem mobilen Kommunikationsgerät 10 und der Servereinrichtung 20, genutzt werden kann, besteht für Dritte keine Möglichkeit, Einsicht in die übertragenen Daten zu nehmen. Auf diese Weise ist die Übertragung der vertraulichen Informationen sicher.

Nach Empfang der Datenpakete sendet die Sende- und Empfangseinrichtung 11 eine Antwortnachricht an die Servereinrichtung 20, um den Empfang der vertraulichen Informationen zu bestätigen. Die empfangenen Datenpakete bzw. vertraulichen Informationen können auf dem mobilen Kommunikationsgerät 10 mit Hilfe einer Anzeigevorrichtung 12 angezeigt werden. Diese Anzeigevorrichtung 12 kann ein Touch-Screen sein, der dann auch gleichzeitig als Eingabemittel verwendet werden kann, beispielsweise um den Empfang der Datenpakete zu bestätigen.

Das mobile Kommunikationsgerät 10 weist eine Speichervorrichtung 14 auf. In dieser Speichervorrichtung 14 können die empfangenen vertraulichen Informationen gespeichert werden. Die Speichervorrichtung 14 kann beispielsweise eine Mikro-SD-Karte sein, auf der die vertraulichen Informationen in verschlüsselter Form gespeichert werden. Auch bei Entfernen der Mikro-SD-Karte 12 aus dem mobilen Kommunikationsgerät 10 können somit die Informationen nicht durch Dritte eingesehen werden.

Um die verschlüsselten vertraulichen Informationen zu entschlüsseln, weist das mobile Kommunikationsgerät 10 eine Verschlüsselungs- und/oder Entschlüsselungseinheit 13 auf. Da die vertraulichen Informationen in verschlüsselter Form gespeichert sind, wird die Verschlüsselungs- und/oder Entschlüsselungseinheit 13 benötigt, um die vertraulichen Informationen auf der Anzeigevorrichtung 12 in lesbarer Form anzuzeigen.

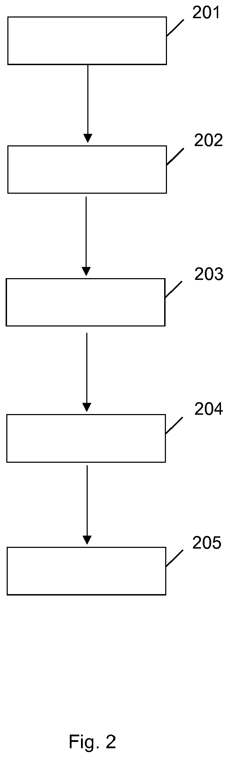

Fig. 2 zeigt ein Verfahren zum Empfangen von Datenpaketen, die vertrauliche Informationen enthalten. In einem ersten Schritt 201 wird ein Startsignal von der Servereinrichtung 20 empfangen. Wie bereits erläutert, weist das Startsignal Informationen auf, um den VPN-Tunnel 30 zwischen der Servereinrichtung 20 und dem mobilen Kommunikationsgerät 10 aufzubauen.

In einem zweiten Schritt 202 wird der VPN-Tunnel 30 zwischen der Servereinrichtung 20 und dem mobilen Kommunikationsgerät 10 basierend auf den empfangenen Informationen aufgebaut.

Anschließend werden in einem dritten Schritt 203 Datenpakete über den bestehenden VPN-Tunnel 30 empfangen.

Die vertraulichen Informationen, die in den Datenpaketen enthalten sind, werden in einem vierten Schritt 204 extrahiert. Danach wird, um den Empfang der vertraulichen Informationen zu bestätigen, in einem fünften Schritt 205 eine Antwortnachricht an die Servereinrichtung 20 gesendet.

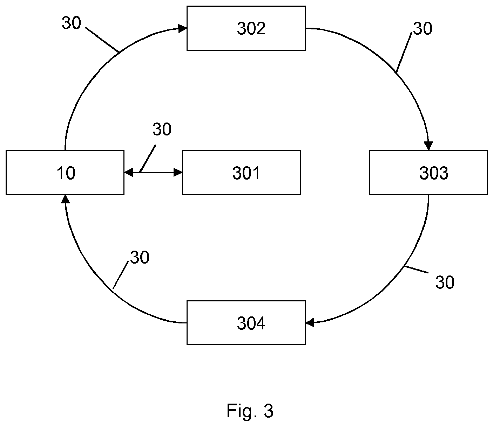

Fig. 3 zeigt beispielhafte Funktionsabläufe innerhalb des Kommunikationssystems 100. Ein Benutzer 301 kommuniziert 305 mittels eines mobilen Kommunikationsgeräts 10, siehe Bezugszeichen 305. Das mobile Kommunikationsgerät 10 empfängt über einen VPN-Tunnel 30 Informationen von einem Telekommunikationsserver oder Kommunikationsserver 303. Die Informationen können in verschlüsselten Datenpaketen 304 enthalten sein. Auf diese Weise kann ein gesicherter Kommunikationsweg bereitgestellt werden. Der Kommunikationsserver 303 bildet zusammen mit einem Bankserver 302 die Servereinrichtung 20 von Fig. 1. Der Kommunikationsserver 303 empfängt von dem Bankserver 302 vertrauliche Informationen, ebenfalls über einen VPN-Tunnel 30, die von dem Kommunikationsserver 303 als verschlüsselte Datenpakete 304 an das mobile Kommunikationsgerät 10 gesendet werden. Das mobile Kommunikationsgerät 10 empfängt und speichert die vertraulichen Informationen als verschlüsselte Datenpakete und bestätigt den Eingang dieser an den Bankserver 302.

Das mobile Kommunikationsgerät 10 kann beispielsweise ein Touch-Pad oder einen Touch-Screen aufweisen, durch den der Benutzer 301 mit dem mobilen Kommunikationsgerät 10 kommunizieren kann, siehe Bezugszeichen 305. Um eine weitere Absicherung des mobilen Kommunikationsgeräts 10 zu gewährleisten, kann es erforderlich sein, dass der Benutzer 301 einen Code zum Einloggen oder zum Übertragen von Daten in das mobile Kommunikationsgerät 10 eingibt. Die verschlüsselten Daten 304 werden in dem mobilen Kommunikationsgerät 10 automatisch durch ein auf dem mobilen Kommunikationsgerät 10 vorhandenes Programm entschlüsselt. Das Programm kann Bestandteil der Verschlüsselungs- und/oder Entschlüsselungseinheit 13 von Fig. 1 sein. Auch kann mit dem mobilen Kommunikationsgerät 10 eine digitale Unterschrift, beispielsweise durch Eingabe von einem Benutzer 301, ermöglicht werden.

Obwohl die vorliegende Erfindung anhand von Ausführungsbeispielen beschrieben wurde, ist sie vielfältig modifizierbar.

### BEZUGSZEICHENLISTE

- 10: mobiles Kommunikationsgerät
- 11: Sende- und Empfangseinrichtung
- 12: Anzeigevorrichtung
- 13: Verschlüsselungs- und/oder Entschlüsselungseinheit
- 14: Speichervorrichtung
- 20: Servereinrichtung
- 30: VPN-Tunnel
- 100: Kommunikationssystem
- 201-205: Verfahrensschritte
- 301: Benutzer
- 302: Bankserver
- 303: Kommunikationsserver
- 304: verschlüsselte Datenpakete
- 305: Kommunikationssignale

## Patentansprüche

1. Mobiles Kommunikationsgerät (10) zum Empfangen von Datenpaketen, die vertrauliche Informationen enthalten, mit:
einer Sende- und Empfangseinrichtung (11) zum Empfangen eines Startsignals von einer Servereinrichtung (20),
wobei das Startsignal Informationen aufweist, um einen VPN-Tunnel (30) zwischen der Servereinrichtung (20) und dem mobilen Kommunikationsgerät (10) aufzubauen,
einer ersten Antenne und einer Chipkarte zum Aufbau des VPN-Tunnels, und
einer zweiten Antenne zum Aufbau einer WLAN-Verbindung, wobei die WLAN-Verbindung getrennt von dem VPN-Tunnel (30) ist,
wobei die Sende- und Empfangseinrichtung (11) eingerichtet ist, den VPN-Tunnel (30) zwischen der Servereinrichtung (20) und dem mobilen Kommunikationsgerät (10) basierend auf den empfangenen Informationen aufzubauen, über den aufgebauten VPN-Tunnel (30) Datenpakete zu empfangen, und vertrauliche Informationen aus den empfangenen Datenpaketen zu extrahieren,
wobei die Sende- und Empfangseinrichtung (11) eingerichtet ist, eine Antwortnachricht an die Servereinrichtung (20) zu senden, um den Empfang der vertraulichen Informationen zu bestätigen.

2. Mobiles Kommunikationsgerät (10) nach Anspruch 1,
**dadurch gekennzeichnet,**
**dass** der VPN-Tunnel (30) einen direkten Gateway zwischen dem mobilen Kommunikationsgerät (10) und der Servereinrichtung (20) aufweist.

3. Mobiles Kommunikationsgerät (10) nach Anspruch 1 oder 2,
**dadurch gekennzeichnet,**
**dass** das mobile Kommunikationsgerät (10) ein nicht-internet-fähiges Kommunikationsgerät ist.

4. Mobiles Kommunikationsgerät (10) nach einem der Ansprüche 1 bis 3,
**dadurch gekennzeichnet,**
**dass** die Sende- und Empfangseinrichtung (11) eingerichtet ist, ein Initiierungssignal an die Servereinrichtung (20) zur Initiierung des VPN-Tunnels (30) zu senden.

5. Mobiles Kommunikationsgerät (10) nach einem der Ansprüche 1 bis 4,
**dadurch gekennzeichnet,**
**dass** die Sende- und Empfangseinrichtung (11) eingerichtet ist, Datenpakete an die Servereinrichtung (20) zu senden, wobei die Datenpakete vertrauliche Informationen enthalten.

6. Mobiles Kommunikationsgerät (10) nach einem der Ansprüche 1 bis 5,
**dadurch gekennzeichnet,**
**dass** die Datenpakete verschlüsselt sind.

7. Mobiles Kommunikationsgerät (10) nach einem der Ansprüche 1 bis 6,
**gekennzeichnet durch**
eine Verschlüsselungs- und/oder Entschlüsselungseinheit (13), die dazu eingerichtet ist, die Datenpakete zu verschlüsseln und/oder zu entschlüsseln.

8. Mobiles Kommunikationsgerät (10) nach einem der Ansprüche 1 bis 7,
**dadurch gekennzeichnet,**
**dass** die Datenpakete verschlüsselte und unverschlüsselte Informationen aufweisen.

9. Mobiles Kommunikationsgerät (10) nach einem der Ansprüche 1 bis 8,
**gekennzeichnet durch**
eine Speichervorrichtung (14), die dazu eingerichtet ist, die empfangenen Informationen zumindest teilweise verschlüsselt zu speichern.

10. Mobiles Kommunikationsgerät (10) nach einem der Ansprüche 1 bis 9,
**dadurch gekennzeichnet,**
**dass** das mobile Kommunikationsgerät (10) ein E-Book-Reader ist.

11. Kommunikationssystem (100), mit:
einer Servereinrichtung (20), und
einem mobilen Kommunikationsgerät (10) nach einem der Ansprüche 1 bis 10,
wobei ein VPN-Tunnel (30) zwischen der Servereinrichtung (20) und dem mobilen Kommunikationsgerät (10) aufbaubar ist.

12. Kommunikationssystem (100) nach Anspruch 11,
**dadurch gekennzeichnet,**
**dass** die Servereinrichtung (20) einen Bankserver (302) aufweist.

13. Verfahren zum Empfangen von Datenpaketen, die vertrauliche Informationen enthalten, mit:
Empfangen (201) eines Startsignals von einer Servereinrichtung (20),
wobei das Startsignal Informationen aufweist, um einen VPN-Tunnel (30) zwischen der Servereinrichtung (20) und einem mobilen Kommunikationsgerät (10) aufzubauen,
Aufbauen (202) des VPN-Tunnels (30) zwischen der Servereinrichtung (20) und dem mobilen Kommunikationsgerät (10) basierend auf den empfangenen Informationen,
wobei der VPN-Tunnel über eine erste Antenne und mit Unterstützung einer Chipkarte aufgebaut wird,
Aufbauen einer WLAN-Verbindung über eine zweite Antenne, wobei die WLAN-Verbindung getrennt von dem VPN-Tunnel (30) ist,
Empfangen (203) von Datenpaketen über den aufgebauten VPN-Tunnel (30),
Extrahieren (204) von vertraulichen Informationen aus den empfangenen Datenpaketen, und
Senden (205) einer Antwortnachricht an die Servereinrichtung (20), um den Empfang der vertraulichen Informationen zu bestätigen.

## Claims

1. A mobile communication device (10) for receiving data packets including confidential information, with:
a transmit and receive entity (11) for receiving a start signal from a server entity (20),
wherein the start signal includes information for establishing a VPN tunnel (30) between the server entity (20) and the mobile communication device (10),
a first antenna and a chip card for establishment of the VPN tunnel, and
a second antenna for establishment of a WLAN connection, wherein the WLAN connection is separated from the VPN tunnel (30),
wherein the transmit and receive entity (11) is configured to establish the VPN tunnel (30) between the server entity (20) and the mobile communication device (10) based on the received information, to receive data packets via the established VPN tunnel (30) and to extract confidential information from the received data packets,
wherein the transmit and receive entity (11) is configured to send a response message to the server entity (20) for confirming the reception of the confidential information.

2. The mobile communication device (10) according to claim 1,
**characterized in**
**that** the VPN tunnel (30) includes a direct gateway between the mobile communication device (10) and the server entity (20).

3. The mobile communication device (10) according to claim 1 or 2,
**characterized in**
**that** the mobile communication device (10) is a not web-enabled communication device.

4. The mobile communication device (10) according to one of claims 1 to 3,
**characterized in**
the transmit and receive entity (11) is configured to send an initiation signal to the server entity (20) for initiating the VPN tunnel (30).

5. The mobile communication device (10) according to one of claims 1 to 4,
**characterized in**
**that** the transmit and receive entity (11) is configured to send data packets to the server entity (20), wherein the data packets include confidential information.

6. The mobile communication device (10) according to one of claims 1 to 5,
**characterized in**
**that** the data packets are encrypted.

7. The mobile communication device (10) according to one of claims 1 to 6,
**characterized by**
an encryption and/or decryption unit (13) configured to encrypt and/or decrypt the data packets.

8. The mobile communication device (10) according to one of claims 1 to 7,
**characterized in**
**that** the data packets include encrypted and/or decrypted information,

9. The mobile communication device (10) according to one of claims 1 to 8,
**characterized by**
a storage device (14) configured to store the received information at least partly in encrypted form.

10. The mobile communication device (10) according to one of claims 1 to 9,
**characterized in**
**that** the mobile communication device (10) is an e-book reader.

11. A communication system (100) with:
a server entity (20) and
a mobile communication device (10) according to one of claims 1 to 10,
wherein a VPN tunnel (30) is establishable between the server entity (20) and the mobile communication device (10).

12. The communication system (100) according to claim 11,
**characterized in**
**that** the server entity (20) includes a bank server (302).

13. A method for receiving data packets including confidential information, with:
receiving (201) a start signal from a server entity (20),
wherein the start signal includes information for establishing a VPN tunnel (30) between the server entity (20) and a mobile communication device (10),
establishing (202) the VPN tunnel (30) between the server entity (20) and the mobile communication device (10) based on the received information,
wherein the VPN tunnel is established via a first antenna and with support of a chip card,
establishing a WLAN connection via a second antenna, wherein the WLAN connection is separated from the VPN tunnel.
receiving (203) data packets via the established VPN tunnel,
extracting (204) confidential information from the received data packets, and
sending (205) a response message to the server entity (20) for confirming the reception of the confidential information.

## Revendications

1. Appareil de communication mobile (10) destiné à recevoir des paquets de données qui contiennent des informations confidentielles, comprenant :
un dispositif d'émission et de réception (11) destiné à recevoir un signal de départ d'un dispositif serveur (20),
dans lequel le signal de départ présente des information afin d'établir un tunnel VPN (30) entre le dispositif serveur (20) et l'appareil de communication mobile (10),
une première antenne et une carte à puce pour établir le tunnel VPN,
une deuxième antenne pour établir une connexion WLAN, la connexion WLAN étant séparée du tunnel VPN (30),
dans lequel le dispositif d'émission et de réception (11) est configuré pour établir le tunnel VPN (30) entre le dispositif serveur (20) et l'appareil de communication mobile (10) sur la base des information reçues, pour recevoir des paquets de données par l'intermédiaire du tunnel VPN (30) établi et pour extraire des informations confidentielles à partir des paquets de données reçus,
dans lequel le dispositif d'émission et de réception (11) est configuré pour émettre un message de réponse au dispositif serveur (20) afin de valider la réception des informations confidentielles.

2. Appareil de communication mobile (10) selon la revendication 1,
**caractérisé en ce,**
**que** le tunnel VPN-Tunnel (30) présente une passerelle directe entre l'appareil de communication mobile (10) et le dispositif serveur (20).

3. Appareil de communication mobile (10) selon la revendication 1 ou 2,
**caractérisé en ce,**
**que** l'appareil de communication mobile (10) est un appareil de communication non compatible Internet.

4. Appareil de communication mobile (10) selon l'une quelconque des revendications 1 à 3,
**caractérisé en ce,**
**que** le dispositif d'émission et réception (11) est configuré pour émettre un signal d'initialisation au dispositif serveur (20) pour l'initialisation du tunnel VPN (30).

5. Appareil de communication mobile (10) selon l'une quelconque des revendications 1 à 4,
**caractérisé en ce,**
**que** le dispositif d'émission et réception (11) est configuré pour émettre des paquets de données au dispositif serveur (20), les paquets de données contenant des informations confidentielles.

6. Appareil de communication mobile (10) selon l'une quelconque des revendications 1 à 5,
**caractérisé en ce,**
**que** les paquets de données sont codés.

7. Appareil de communication mobile (10) selon l'une quelconque des revendications 1 à 6,
**caractérisé par**
une unité de codage et/ou de décodage (13) qui est configurée pour coder et/ou décoder les paquets de données.

8. Appareil de communication mobile (10) selon l'une quelconque des revendications 1 à 7,
**caractérisé en ce,**
**que** les paquets de données présentent des informations codées et décodées.

9. Appareil de communication mobile (10) selon l'une quelconque des revendications 1 à 8,
**caractérisé par**
un dispositif de mémorisation (14) qui est configuré pour mémoriser, au moins en partie de manière codée, les informations reçues.

10. Appareil de communication mobile (10) selon l'une quelconque des revendications 1 à 9,
**caractérisé en ce,**
**que** l'appareil de communication mobile (10) est un lecteur de livres électroniques.

11. Système de communication (100) comprenant :
un dispositif serveur (20) et
un appareil de communication mobile (10) selon l'une quelconque des revendications 1 à 10,
dans lequel un tunnel VPN (30) peut être établi entre le dispositif serveur (20) et l'appareil de communication mobile (10).

12. Système de communication (100) selon la revendication 11,
**caractérisé en ce,**
**que** le dispositif serveur (20) présente un serveur de banque (302).

13. Procédé de réception de paquets de données qui contiennent des informations confidentielles, comprenant :
réception (201) d'un signal de départ d'un dispositif serveur (20),
dans lequel procédé le signal de départ présente des informations afin d'établir un tunnel VPN (30) entre le dispositif serveur (20) et un appareil de communication mobile (10),
établissement (202) du tunnel VPN (30) entre le dispositif serveur (20) et l'appareil de communication mobile (10) sur la base des informations reçues,
dans lequel le tunnel VPN est établi par l'intermédiaire d'une première antenne et avec le soutien d'une carte à puce,
établissement d'une connexion WLAN par l'intermédiaire d'une deuxième antenne, la connexion WLAN étant séparée du tunnel VPN (30),
réception (203) de paquets de données par l'intermédiaire du tunnel VPN (30) établi, extraction (204) d'informations confidentielles à partir des paquets de données reçus, et
émission (205) au dispositif serveur (20) d'un message de réponse afin de valider la réception des informations confidentielles.
